# EUROPEAN PATENT APPLICATION

(11) **EP 4 675 011 A1**
(43) Date of publication of application: **07.01.2026**
(21) Application number: 24186913.0
(22) Date of filing: 05.07.2024
(51) Int. Cl.: C25B 1/04, C25B 9/73, C25B 15/023, C25B 15/08

(54) **ELECTROLYSER**

(71) Applicant: Siemens Energy Global GmbH & Co. KG, 81739 München (DE)
(72) Inventor: Do, Nga Thi Quynh, 91056 Erlangen (DE)

(57) **Abstract**

The invention relates to an electrolyser (1) that comprises a stack (2) that comprises at least one electrochemical cell that comprises a cathode (4), a cathode chamber (50) that is confined by the cathode (4), an anode (5) and an anode chamber (51) that is confined by the anode (5), wherein the electrolyser (1) comprises a cathode pump (13) and a cathode inlet line (15) arranged downstream of the cathode pump (13), wherein the cathode pump (13) is adapted to pump a liquid into the cathode chamber (50) via the cathode inlet line (15), wherein the electrolyser (1) comprises an anode pump (14) and an anode inlet line (17) arranged downstream of the anode pump (14), wherein the anode pump (14) is adapted to pump the liquid into the anode chamber (51) via the anode inlet line (17), wherein the electrolyser (1) comprises a bypass line (11) that fluidly connects the cathode inlet line (15) and/or the cathode chamber (50) with the anode inlet line (17) and/or the anode chamber (51), wherein the electrolyser (1) comprises a pressure difference determination device that is adapted to determine the pressure difference between the pressure in the cathode chamber (50) and the pressure in the anode chamber (51), wherein the electrolyser (1) comprises a control valve (10) that is arranged in the cathode inlet line (15) or in the anode inlet line (17) and is controlled such that the pressure difference is minimised.

## Description

The invention relates to an electrolyser.

An electrolyser is adapted to split water into hydrogen and oxygen by electrolysis. The electrolyser comprises an electrochemical cell having a cathode and an anode, wherein the electrolysis can be described by following reaction equations:

Cathode: 2 H₂O + 2 e⁻ -> H₂ + 2 OH⁻

Anode: 2 OH⁻ -> ½ O₂ + H₂O + 2 e⁻

Total: H₂O -> H₂ + ½ O₂

As can be seen from the equations, both water and a gas are in contact with the cathode and the anode. During operation of the electrolyser, a pressure difference can occur between the cathode and the anode. This can lead to a transport of one gas to the other gas which results in mixing of oxygen with hydrogen. This mixing creates a potential explosive mixture which is a safety risk of the electrolyser.

It is therefore an object of the invention to create an electrolyser which has a low safety risk.

The electrolyser according to the invention comprises a stack, a cathode pump, a cathode inlet line, an anode pump, an anode inlet line, a bypass line, a pressure difference determination device and a control valve. The stack comprises at least one electrochemical cell, wherein the electrochemical cell comprises a cathode, a cathode chamber that is confined by the cathode, an anode and an anode chamber that is confined by the anode. The cathode inlet line is arranged downstream of the cathode pump, wherein the cathode pump is adapted to pump a liquid into the cathode chamber via the cathode inlet line. The anode inlet line is arranged downstream of the anode pump, wherein the anode pump is adapted to pump the liquid into the anode chamber via the anode inlet line. The bypass line fluidly connects the cathode inlet line and/or the cathode chamber with the anode inlet line and/or the anode chamber. The pressure difference determination device is adapted to determine the pressure difference between the pressure in the cathode chamber and the pressure in the anode chamber. The control valve is arranged in the cathode inlet line or in the anode inlet line and is controlled such that the pressure difference is minimised.

By providing the cathode pump and the anode pump, two separate cycles for circulating the liquid to the cathode and to the anode can be provided. That has advantage that no or only little mixing of the liquid in the cycles can be achieved. Since hydrogen and oxygen will be dissolved in the liquid, hydrogen and oxygen will not be mixed or only at a small extend, whereby the formation of potential explosive mixtures can be avoided. Since the bypass line is provided the pressure in the cathode chamber and the pressure in the anode chamber can be equalised via the bypass line. The pressure difference is even more minimised by the control valve by causing a resistance to the flow of the liquid. Since the pressure difference is minimised, there is no or only very little transport of the hydrogen and/or the oxygen in the stack, whereby the risk of mixing the hydrogen and the oxygen to a potential explosive mixture is reduced. Thereby, the electrolyser has a low safety risk. This is particularly relevant when the electrolyser is operated at a low turndown since the mixing of the hydrogen with the oxygen due the transport of the hydrogen and/or the oxygen in the stack is particularly relevant at the low turndown.

It is preferred that the pressure difference determination device comprises a pressure difference sensor that is fluidly connected to the cathode chamber and to the anode chamber and is adapted to measure the pressure difference. Alternatively, it is preferred that the pressure difference determination device comprises a cathode pressure sensor that is adapted to measure the pressure of the liquid in the cathode inlet line, a cathode flow sensor that is adapted to measure the flow rate of the liquid in the cathode inlet line, an anode pressure sensor that is adapted to measure the pressure of the liquid in the anode inlet line and an anode flow sensor that is adapted to measure the flow rate of the liquid in the cathode inlet line, wherein the pressure difference determination device is adapted to calculate the pressure difference using the pressure and the flow rate of the liquid in the cathode inlet line and the pressure and the flow rate of the liquid in the anode inlet line.

The electrolyser preferably comprises a bypass valve that is arranged in the bypass line. By means of the bypass valve the mixing of the liquid of the two cycles can be minimised or avoided. The bypass valve is preferably a check valve. Thereby, it can be assured that the liquid only flows in one direction. Alternatively, the bypass valve is preferably a further control valve. The further control valve can for example be controlled such that the resistance for the flow flowing through the further control valve is decreased when pressure difference becomes higher.

The electrolyser preferably comprises an additional control valve that is adapted to fulfil the function of the control valve in the case that the control valve fails. Therefore, redundancy is provided and the safety risk is further reduced.

It is preferred that the electrolyser comprises a cathode separator that is adapted to separate the hydrogen from the liquid and comprises an inlet port that is adapted to receive a fluid from the cathode chamber, a first outlet port that is fluidly connected to the cathode pump and a second outlet port that is adapted to discharge the hydrogen from the cathode separator. It is preferred that the electrolyser comprises an anode separator that is adapted to separate the oxygen from the liquid and comprises an inlet port that is adapted to receive a fluid from the anode chamber, a first outlet port that is fluidly connected to the anode pump and a second outlet port that is adapted to discharge the oxygen from the anode separator. Thereby, the two separate cycles are maintained, avoiding or minimising the mixing of the hydrogen and the oxygen both dissolved in the liquid.

The stack preferably comprises a plurality of the electrochemical cells, wherein the cathode inlet line is adapted to direct the liquid into the cathode chamber of each of the electrochemical cells and the anode inlet line is adapted to direct the liquid into the anode chamber of each of the electrochemical cells.

The electrolyser preferably comprises a further stack that comprises at least one of the electrochemical cells, wherein the cathode inlet line comprises a cathode branch that is adapted to split the flow of the liquid to the cathode chamber of the stack and to the cathode chamber of the further stack, wherein the anode inlet line comprises an anode branch that is adapted to split the flow of the liquid to the anode chamber of the stack and to the anode chamber of the further stack, wherein the control valve is arranged upstream of the cathode branch or upstream of the anode branch. It is therefore possible to minimize the pressure difference of two stacks. In the case that the electrolyser comprises more than one further stack, the cathode branch is adapted to split the flow of the liquid to the cathode chambers of all the stacks, the anode branch is adapted to split the flow of the liquid to the anode chambers of all the stacks, wherein the control valve is arranged upstream of the cathode branch or upstream of the anode branch.

It is preferred that the liquid comprises water. The liquid is preferably a lye. The electrolyser is preferably an alkaline electrolyser. Gas transport within the stack is particularly relevant when the electrolyser is an alkaline electrolyser that is adapted to use the lye. It is preferred that the electrochemical cell comprises a membrane that comprises Nafion.

In the following the invention is explained on the basis of schematic drawings.

Figure 1 shows a hydraulic diagram of a first embodiment of the invention and

Figure 2 shows a hydraulic diagram of a second embodiment of the invention.

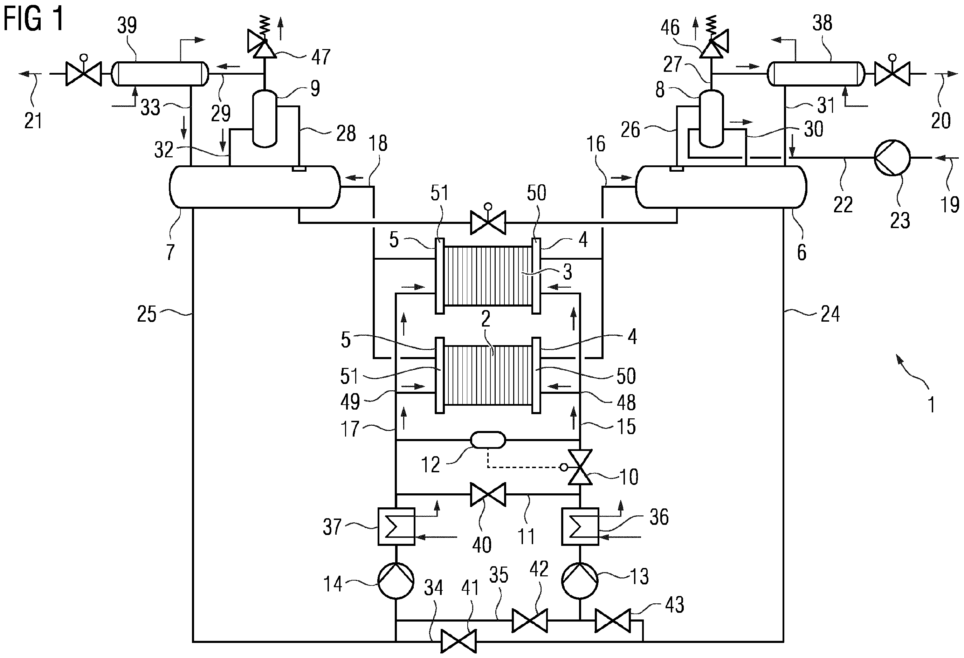

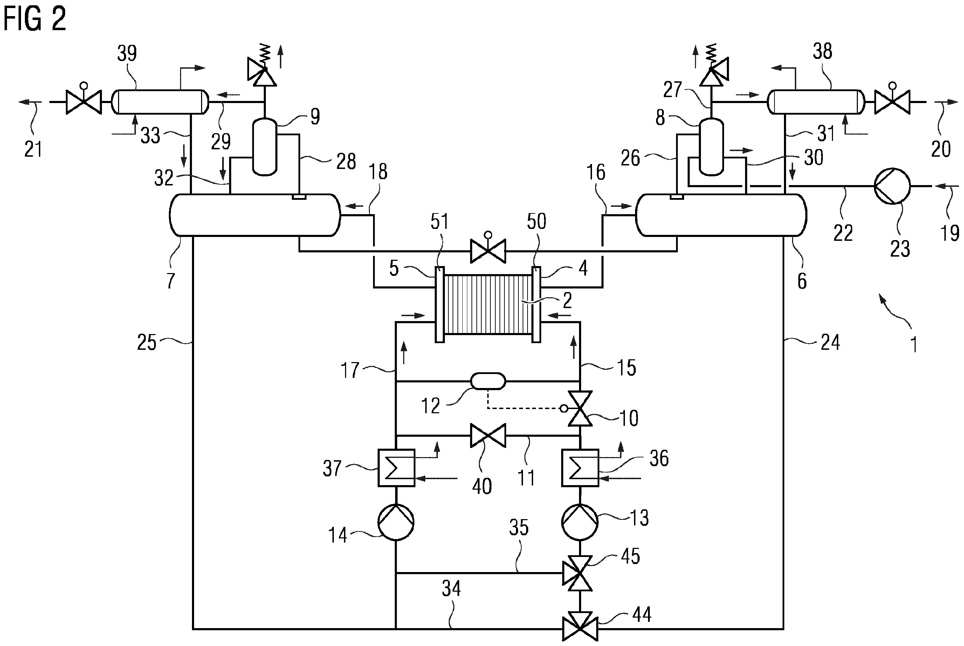

As it can be seen from Figures 1 and 2, an electrolyser 1 comprises a stack 2, a cathode pump 13, a cathode inlet line 15, an anode pump 14, an anode inlet line 17, a bypass line 11, a pressure difference determination device and a control valve 10. The stack comprises at least one electrochemical cell, wherein the electrochemical cell comprises a cathode 4, a cathode chamber 50 that is confined by the cathode 4, an anode 5 and an anode chamber 51 that is confined by the anode 5. The cathode inlet line 15 is arranged downstream of the cathode pump 13, wherein the cathode pump 13 is adapted to pump a liquid into the cathode chamber 50 via the cathode inlet line 15. The anode inlet line 17 is arranged downstream of the anode pump 14, wherein the anode pump 14 is adapted to pump the liquid into the anode chamber 51 via the anode inlet line 17. The bypass line 11 fluidly connects the cathode inlet line 15 and/or the cathode chamber 50 with the anode inlet line 17 and/or the anode chamber 51, wherein Figures 1 and 2 show that the bypass line 11 fluidly connects the cathode inlet line 15 with the anode inlet line 17. The pressure difference determination device is adapted to determine the pressure difference between the pressure in the cathode chamber 50 and the pressure in the anode chamber 51. The control valve 10 is arranged in the cathode inlet line 15 or in the anode inlet line 17 and is controlled such that the pressure difference is minimised.

The bypass line 11 can be arranged downstream of the cathode pump 13 and downstream of the anode pump 14. In addition, in the case that the control valve 10 is arranged in the cathode inlet line 15, an intersection of the bypass line 11 and the cathode inlet line 15 can be arranged upstream of the control valve 10. In the case that the control valve 10 is arranged in the anode inlet line 17, an intersection of the bypass line 11 and the anode inlet line 17 can be arranged upstream of the control valve 10.

Figures 1 and 2 show that the pressure difference determination device can comprise a pressure difference sensor 12 that is fluidly connected to the cathode chamber 50 and to the anode chamber 51 and is adapted to measure the pressure difference. In Figures 1 and 2 the pressure difference sensor 12 is indirectly connected to the cathode chamber 50 via the cathode inlet line 15 and indirectly connected to the anode chamber 51 via anode inlet line 17. It also conceivable that the pressure difference sensor 12 is directly connected to cathode chamber 50 and to the anode chamber 51.

Alternatively to providing the pressure difference determination sensor it is conceivable that the pressure difference device comprises a cathode pressure sensor that is adapted to measure the pressure of the liquid in the cathode inlet line 15, a cathode flow sensor that is adapted to measure the flow rate of the liquid in the cathode inlet line 15, an anode pressure sensor that is adapted to measure the pressure of the liquid in the anode inlet line 17 and an anode flow sensor that is adapted to measure the flow rate of the liquid in the cathode inlet line 17, wherein the pressure difference determination device is adapted to calculate the pressure difference using the pressure and the flow rate of the liquid in the cathode inlet line 15 and the pressure and the flow rate of the liquid in the anode inlet line 17.

The electrolyser 1 can comprise a bypass valve 40 that is arranged in the bypass line 11. The bypass valve 40 can for example be a check valve. In another example, the bypass valve 40 can be a further control valve.

It is conceivable that the electrolyser 1 comprises an additional control valve that is adapted to fulfil the function of the control valve 10 in the case that the control valve 10 fails.

The liquid can for example comprise water. In this case, hydrogen 20 is formed in the cathode chamber 50 and oxygen 21 is formed in the anode chamber 51 during electrolysis. Since more volume of the gas is formed in the cathode chamber 50 than in the anode chamber 51 (see the reaction equations above) and therefore a higher pressure is expected in the cathode chamber 50 than in the anode chamber 51, it is preferred that the control valve 10 is arranged in the cathode inlet line 15. The liquid can for example be a lye and the electrolyser 1 can be an alkaline electrolyser. The electrochemical cell can for example comprise a membrane that comprises Nafion. Nafion is a sulfonated tetrafluoroethylene based fluoropolymer-copolymer and especially suited for the alkaline electrolyser.

Figures 1 and 2 show that the electrolyser 1 can comprise a cathode separator 6 that is adapted to separate the hydrogen 20 from the liquid. The cathode separator 6 can comprise a vessel that has larger internal distances than the lines connected to the cathode separator 6. The electrolyser 1 can comprise a cathode outlet line 16 and the cathode separator 6 can comprise an inlet port that is fluidly connected to the cathode outlet line 16 and adapted to receive a fluid from the cathode chamber 50. The cathode separator 6 can comprise a first outlet port that is fluidly connected to the cathode pump 13 and adapted such that the liquid can flow to the cathode pump 13 via a cathode support line 24. In addition, the cathode separator 6 can comprise a second outlet port that is adapted to discharge the hydrogen 20 from the cathode separator 6 via a first hydrogen line 26. The electrolyser 1 can comprise an anode separator 7 that is adapted to separate the oxygen 21 from the liquid. The anode separator 7 can comprise a vessel different from the vessel of the cathode separator 6 and having larger internal distances than the lines connected to the anode separator 7. The electrolyser 1 can comprise an anode outlet line 18 and the anode separator 7 can comprise an inlet port that is fluidly connected to the anode outlet line 18 adapted to receive a fluid from the anode chamber 51. The anode separator 7 can comprise a first outlet port that is fluidly connected to the anode pump 14 and adapted such that the liquid can flow to the anode pump 14 via an anode support line 25. In addition, the anode separator 7 can comprise a second outlet port that is adapted to discharge the oxygen 21 from the anode separator 7 via a first oxygen line 28. In this manner, a cathode cycle for circulating the liquid to and from the cathode 4 and an anode cycle for circulating the liquid to and from the anode 5 can be formed, wherein during operation of the electrolyser 1 the cathode cycle and the anode cycle are only fluidly connected to each other by the bypass line 11.

The electrolyser 1 can comprise an additional cathode separator 8, wherein the first hydrogen line 26 is connected to the additional cathode separator 8. The electrolyser 1 can comprise a second hydrogen line 27 that is connected to the additional cathode separator 8 and is adapted to flow the hydrogen 20 away from the additional cathode separator 8. The electrolyser 1 can comprise a first cathode return line 30 that is connected to the additional cathode separator 8 and to the cathode separator 6 for flowing the liquid from the additional cathode separator 8 to the cathode separator 6. The electrolyser 1 can comprise a cathode outlet heat exchanger 38 adapted to cool the hydrogen 20 in the second hydrogen line 27. The electrolyser 1 can comprise a second cathode return line 31 connected to the cathode outlet heat exchanger 38 and adapted to flow the liquid from the second hydrogen line 27 to the cathode separator 6. A cathode safety valve 46 can be arranged in the second hydrogen line 27 upstream of the cathode outlet heat exchanger 38.

The electrolyser 1 can comprise an additional anode separator 9, wherein the first oxygen line 28 is connected to the additional anode separator 9. The electrolyser 1 can comprise a second oxygen line 29 that is connected to the additional anode separator 9 and is adapted to flow the oxygen 21 away from the additional anode separator 9. The electrolyser 1 can comprise a first anode return line 32 that is connected to the additional anode separator 9 and to the anode separator 7 for flowing the liquid from the additional anode separator 9 to the anode separator 7. The electrolyser 1 can comprise an anode outlet heat exchanger 39 adapted to cool the oxygen 21 in the second oxygen line 28. The electrolyser 1 can comprise a second anode return line 33 connected to the anode outlet heat exchanger 39 and adapted to flow the liquid from the second oxygen line 29 to the anode separator 7. An anode safety valve 47 can be arranged in the second oxygen line 29 upstream of the anode outlet heat exchanger 39.

As can be seen from Figures 1 and 2, the electrolyser 1 can comprise a fresh water line 22 and a fresh water pump 23 adapted to pump fresh water 19 through the fresh water line 22. The fresh water line 22 can be connected to the additional cathode separator 8 (see Figures 1 and 2) or to the additional anode separator 9. In order to flow the liquid from the cathode cycle to the anode cycle or from the anode cycle to the cathode cycle, the electrolyser 1 can comprise a first connecting line 34 that fluidly connects the cathode support line 24 with the anode support line 25. A valve 41 can be provided in the first connecting line 34 (see Figure 1) for opening and closing the first connecting line 34. In addition, the electrolyser 1 can comprise a second connecting line 35 that fluidly connects the cathode support line 24 with the anode support line 25. A valve 42 can be provided in the second connecting line 35 (see Figure 1) for opening and closing the second connecting line 35. In addition, a valve 43 can be provided in the cathode support line 24 (see Figure 1) or in the anode support line 25 downstream from the junction of the first connecting line 34 with the cathode support line 24 or downstream of the junction of the first connecting line 34 with the anode support line 25 and upstream of the junction of the second connecting line 35 with cathode support line 24 or upstream of the second connecting line 35 with the anode support line 25. Alternatively to providing the valves 41, 42, 43 two three way valves 44, 45 can be provided at the junctions of the first connecting line 34 and the second connecting line 35 with the cathode support line 24 or the anode support line 25 (see Figure 2).

It is conceivable that the stack 2 comprises a plurality of the electrochemical cells, wherein the cathode inlet line 15 is adapted to direct the liquid into the cathode chamber 50 of each of the electrochemical cells and the anode inlet line 17 is adapted to direct the liquid into the anode chamber 51 of each of the electrochemical cells.

Figure 1 shows that the electrolyser 1 can comprise a further stack 3 that comprises at least one of the electrochemical cells. The cathode inlet line 15 can comprise a cathode branch 48 that is adapted to split the flow of the liquid to the cathode chamber 50 of the stack 2 and to the cathode chamber 50 of the further stack 3, wherein the anode inlet line 17 comprises an anode branch 49 that is adapted to split the flow of the liquid to the anode chamber 51 of the stack 2 and to the anode chamber 51 of the further stack 3, wherein the control valve 10 is arranged upstream of the cathode branch 48 (see Figure 1) or upstream of the anode branch 49.

It is conceivable that the electrolyser 1 comprises a cathode inlet heat exchanger 36 adapted to cool the liquid in the cathode inlet line 15 and an anode inlet heat exchanger 37 adapted to cool the liquid in the anode inlet line 17. The cathode inlet heat exchanger 36 can for example be arranged upstream of the control valve 10 (see Figures 1 and 2) or the anode inlet heat exchanger 37 can for example be arranged upstream of the control valve 10. It is conceivable that the cathode inlet heat exchanger 36 is arranged upstream of the cathode branch 48 and that the anode inlet heat exchanger 37 is arranged upstream of the anode branch 49 (see Figure 1).

## Claims

1. Electrolyser that comprises a stack (2) that comprises at least one electrochemical cell that comprises a cathode (4), a cathode chamber (50) that is confined by the cathode (4), an anode (5) and an anode chamber (51) that is confined by the anode (5), wherein the electrolyser (1) comprises a cathode pump (13) and a cathode inlet line (15) arranged downstream of the cathode pump (13), wherein the cathode pump (13) is adapted to pump a liquid into the cathode chamber (50) via the cathode inlet line (15), wherein the electrolyser (1) comprises an anode pump (14) and an anode inlet line (17) arranged downstream of the anode pump (14), wherein the anode pump (14) is adapted to pump the liquid into the anode chamber (51) via the anode inlet line (17), wherein the electrolyser (1) comprises a bypass line (11) that fluidly connects the cathode inlet line (15) and/or the cathode chamber (50) with the anode inlet line (17) and/or the anode chamber (51), wherein the electrolyser (1) comprises a pressure difference determination device that is adapted to determine the pressure difference between the pressure in the cathode chamber (50) and the pressure in the anode chamber (51), wherein the electrolyser (1) comprises a control valve (10) that is arranged in the cathode inlet line (15) or in the anode inlet line (17) and is controlled such that the pressure difference is minimised.

2. Electrolyser according to claim 1, wherein the pressure difference determination device comprises a pressure difference sensor (12) that is fluidly connected to the cathode chamber (50) and to the anode chamber (51) and is adapted to measure the pressure difference.

3. Electrolyser according to claim 1, wherein the pressure difference determination device comprises a cathode pressure sensor that is adapted to measure the pressure of the liquid in the cathode inlet line (15), a cathode flow sensor that is adapted to measure the flow rate of the liquid in the cathode inlet line (15), an anode pressure sensor that is adapted to measure the pressure of the liquid in the anode inlet line (17) and an anode flow sensor that is adapted to measure the flow rate of the liquid in the cathode inlet line (17), wherein the pressure difference determination device is adapted to calculate the pressure difference using the pressure and the flow rate of the liquid in the cathode inlet line (15) and the pressure and the flow rate of the liquid in the anode inlet line (17).

4. Electrolyser according to any one of claims 1 to 3, wherein the electrolyser (1) comprises a bypass valve (40) that is arranged in the bypass line (11).

5. Electrolyser according to claim 4, wherein the bypass valve (40) is a check valve.

6. Electrolyser according to claim 4, wherein the bypass valve (40) is a further control valve.

7. Electrolyser according to any one of claims 1 to 6, wherein the electrolyser (1) comprises an additional control valve that is adapted to fulfil the function of the control valve (10) in the case that the control valve (10) fails.

8. Electrolyser according to any one of claims 1 to 7, wherein the electrolyser (1) comprises a cathode separator (6) that is adapted to separate hydrogen (20) from the liquid and comprises an inlet port that is adapted to receive a fluid from the cathode chamber (50), a first outlet port that is fluidly connected to the cathode pump (13) and a second outlet port that is adapted to discharge the hydrogen (20) from the cathode separator (6), wherein the electrolyser (1) comprises an anode separator (7) that is adapted to separate oxygen (21) from the liquid and comprises an inlet port that is adapted to receive a fluid from the anode chamber (51), a first outlet port that is fluidly connected to the anode pump (14) and a second outlet port that is adapted to discharge the oxygen (21) from the anode separator (7).

9. Electrolyser according to any one of claims 1 to 8, wherein the stack (2) comprises a plurality of the electrochemical cells, wherein the cathode inlet line (15) is adapted to direct the liquid into the cathode chamber (50) of each of the electrochemical cells and the anode inlet line (17) is adapted to direct the liquid into the anode chamber (51) of each of the electrochemical cells.

10. Electrolyser according to any one of claims 1 to 9, wherein the electrolyser (1) comprises a further stack (3) that comprises at least one of the electrochemical cells, wherein the cathode inlet line (15) comprises a cathode branch (48) that is adapted to split the flow of the liquid to the cathode chamber (50) of the stack (2) and to the cathode chamber (50) of the further stack (3), wherein the anode inlet line (17) comprises an anode branch (49) that is adapted to split the flow of the liquid to the anode chamber (51) of the stack (2) and to the anode chamber (51) of the further stack (3), wherein the control valve (10) is arranged upstream of the cathode branch (48) or upstream of the anode branch (49).

11. Electrolyser according to any one of claims 1 to 10, wherein the liquid comprises water.

12. Electrolyser according to any one of claims 1 to 11, wherein the liquid is a lye.

13. Electrolyser according to any one of claims 1 to 12, wherein the electrolyser (1) is an alkaline electrolyser.

14. Electrolyser according to any one of claims 1 to 13, wherein the electrochemical cell comprises a membrane that comprises Nafion.
